# FASCICULE DE BREVET EUROPEEN

(11) **EP 0 580 049 B1**
(45) Date de publication et mention de la délivrance du brevet: **01.04.1998**
(21) Numéro de dépôt: 93111102.5
(22) Date de dépôt: 12.07.1993
(51) Int. Cl.: H01L 41/09, G04C 3/12

(54) **Moteur piézo-électrique**
Piezo-elektrischer Motor
Piezo-electric motor

(30) Priorité: 20.07.1992 CH 2282/92
(43) Date de publication de la demande: 26.01.1994
(73) Titulaire: ASULAB S.A., CH-2501 Bienne (CH)
(72) Inventeur: Luthier, Roland, CH-1025 St-Sulpice (CH); Froidevaux, Raymond, CH-2017 Boudry (CH)
(74) Mandataire: de Montmollin, Henri

(56) Documents cités:
- EP-A- 0 294 102
- EP-A- 0 557 106
- US-A- 4 548 090
- PATENT ABSTRACTS OF JAPAN vol. 12, no. 118 (E-600)(2965) 13 Avril 1988 & JP-A-62 247 775
- PATENT ABSTRACTS OF JAPAN vol. 12, no. 369 (E-665)(3216) 4 Octobre 1988 & JP-A-63 121 478

## Description

La présente invention concerne un moteur piézo-électrique.

Plus particulièrement, l'invention concerne un moteur piézo-électrique de faible épaisseur, pouvant équiper une pièce d'horlogerie.

Un moteur piézo-électrique de faible dimension pouvant satisfaire une telle application est décrit dans la demande de brevet CH 02 553/91-0, déposée le 30 Août 1991 au nom de la demanderesse (EP-A-0 537 446). Ce moteur piézo-électrique, qui est représenté aux figures 1, 2 et 3 annexées et qui sera décrit de façon détaillée ci-après, comprend classiquement, d'une part, un stator associé à des moyens piézo-électriques, et d'autre part, un rotor qui est monté à rotation sur ce stator. Les moyens piézo-électriques sont constitués par une céramique polarisée qui peut être électriquement excitée pour impliquer un mouvement vibratoire au stator, tandis que le rotor est pourvu de lames de flexion disposées en appui élastique sur le stator. Ces lames sont conformées pour assurer la transmission de ce mouvement vibratoire au rotor.

L'appui élastique du rotor sur le stator, via ces lames de transmission, est assuré par des moyens d'appui comportant un ressort en forme de cuvette. Ce ressort est maintenu axialement par une vis à tête engagée dans un axe fixe étagé qui forme support et qui sollicite le rotor, selon cet axe. Entre la tête de la vis et le ressort est disposé un roulement permettant la rotation concomitante de l'ensemble rotor-ressort.

Ce moteur présente un encombrement en hauteur tel qu'il ne peut équiper des pièces d'horlogerie présentant par nature une épaisseur faible.

Ainsi, la présente invention a-t-elle pour but de pallier cet inconvénient en fournissant un moteur piézo-électrique de faible épaisseur capable d'équiper une pièce d'horlogerie sans nuire à ses caractéristiques dimensionnelles.

A cet effet, la présente invention a pour objet un moteur piézo-électrique, du type comprenant :
- un support,
- un stator solidaire du support,
- des moyens piézo-électriques susceptibles d'être électriquement excités pour impliquer un mouvement vibratoire au stator,
- un rotor monté à rotation par rapport au support, ce rotor comportant un corps sur lequel sont disposés des moyens de transmission conformés pour transmettre le mouvement vibratoire du stator audit rotor et pour entraîner ce rotor en rotation, et
- des moyens d'appui axial élastique du rotor sur le stator,
caractérisé en ce que le corps du rotor est formé par une structure qui est élastiquement déformable, au moins axialement en direction du stator, et qui forme au moins en partie lesdits moyens d'appui.

EP-A-0 557 106, étant un droit antérieur selon l'article 54(3) CBE, décrit un moteur, dans lequel le rotor est pressé sur le bord latéral du stator.

Mais d'autres caractéristiques et avantages de l'invention apparaîtront à la lecture de la description détaillée qui suit, faite en référence aux dessins annexés qui sont donnés uniquement à titre d'exemple et dans lesquels:
- La figure 1 est une vue en coupe longitudinale d'un moteur piézo-électrique classique, tel que celui décrit dans la demande de brevet CH 02 553/91-0,
- la figure 2 est une vue faite selon la flèche II de la figure 3, représentant, en vue de dessous, un mode de réalisation particulier d'un élément rotorique du moteur décrit dans la demande suisse susmentionnée,
- la figure 3 est une vue de côté faite selon la flèche III de la figure 2, mais représentant l'élément de cette figure associé à un disque rigide pour former un rotor classique destiné à équiper le moteur de la figure 1,
- la figure 4 est une vue en coupe longitudinale, représentant un moteur selon un premier mode de réalisation de l'invention,
- la figure 5 est une vue de dessus du moteur de la figure 4,
- la figure 6 est une vue faite selon la flèche VI des figures 4 et 7, représentant uniquement le corps et les lames de transmission du rotor équipant le moteur selon l'invention,
- la figure 7 est une vue faite selon la flèche VII de la figure 6 et représentant de côté et dans une position de repos l'ensemble corps-lame de la figure 6,
- la figure 8 est une vue en coupe longitudinale, représentant un moteur selon un deuxième mode de réalisation de l'invention,
- la figure 9 est une vue de côté uniquement du rotor et du stator de la figure 4, mais représentés à une échelle différente pour une meilleure compréhension des dessins,
- la figure 10 est une demi-vue en section du stator des figures 4 et 8, représenté en traits plein dans sa position de repos, et en traits mixtes interrompus dans ses deux positions extrêmes de déformation lorsque ce stator est excité en vibration, selon une première variante du mouvement vibratoire selon l'invention,
- les figures 11 et 12 sont des diagrammes représentant les courbes de variation d'amplitude de la déformation du stator selon l'invention en fonction, respectivement, du rayon sur le stator et d'une position angulaire sur celui-ci,
- la figure 13 est une demi-vue en section, similaire à la figure 10, mais représentant une deuxième variante du mouvement vibratoire selon l'invention, et
- les figures 14 et 15 sont respectivement des vues similaires à celles des figures 11 et 12, mais représentant des courbes de variation d'amplitude du stator lorsqu'il est mis en vibration selon la variante du mode vibratoire de la figure 13.

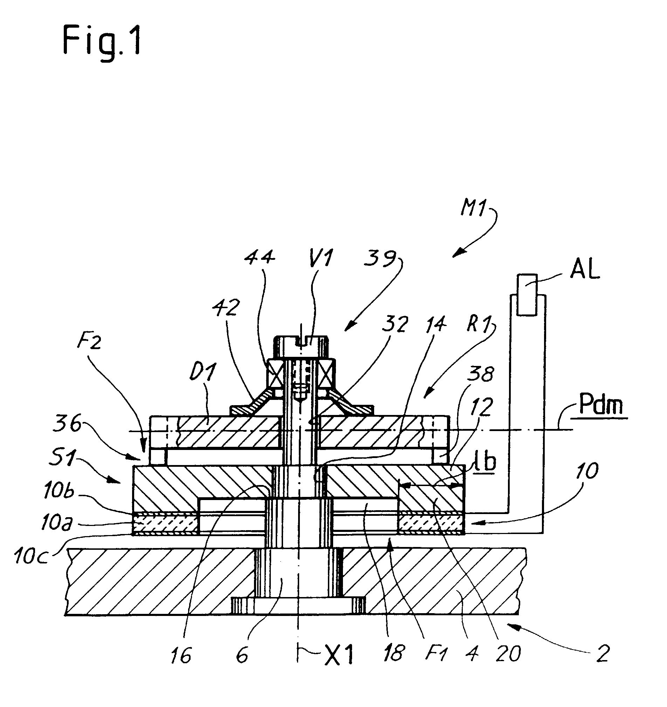

En se référant à la figure 1, on décrira ci-après un moteur piézo-électrique classique, tel que celui décrit dans la demande de brevet CH 02 553/91-0.

Ce moteur, qui est repéré par la référence générale M1, comporte un support 2 qui est, dans cet exemple, constitué par une embase 4 dans laquelle est encastré, notamment par emmanchement à force du type chassage, un axe étagé ou tenon 6 faisant saillie.

Le tenon 6 matérialise un axe géométrique X1, formant un axe géométrique de rotation autour duquel peut tourner un rotor R1. L'embase 4 ainsi que le tenon 6 sont réalisés en un matériau métallique, tel que du laiton ou un alliage du type acier inoxydable.

L'ensemble embase 4 - tenon 6 constitue donc une structure fixe formant le support de ce moteur piézo-électrique.

Le moteur M1 comporte par ailleurs un stator S1 qui est monté fixement, de même par emmanchement à force (chassage) ou par collage, sur le tenon 6.

Sur ce stator sont montés des moyens piézo-électriques 10 constitués, d'une part, d'un élément piézo-électrique 10a, telle qu'une céramique qui est polarisée uniformément selon son épaisseur, et d'autre part, de deux électrodes 10b et 10c qui sont reliées de façon classique à une alimentation électrique AL, représentée ici de façon schématique.

Les moyens piézo-électriques 10 forment donc un transducteur qui, en réponse à une excitation électrique fournie par l'alimentation AL via les électrodes 10b et 10c peut prendre un mouvement vibratoire. Ces phénomènes de piézo-électricité ainsi que la construction et l'agencement de tels transducteurs piézo-électriques dans des moteurs de ce type sont bien connus de l'homme du métier et ne seront donc par conséquent pas décrits ici de façon détaillée.

Le stator S1 est constitué par un disque 12 comportant en son centre un orifice débouchant 14 qui, dans cet exemple, est maintenu fixement sur le tenon 6. Le disque 12 qui forme l'ossature du stator S1 repose en appui axial sur un épaulement 16 de ce tenon.

Comme on le voit particulièrement sur la figure 1, une face F1 du disque 12, disposée en regard de l'embase 4 et dite face arrière, est évidée dans sa partie centrale pour laisser apparaître une creusure borgne ou chambrage 18, débouchant vers l'embase 4.

Cette creusure 18 délimite sur la face arrière F1 du disque 12, un collet annulaire 20 sur lequel sont montés fixement les moyens piézo-électriques 10 qui ont la même forme annulaire.

Le rotor R1 quant à lui repose en appui axial sur une face F2 du disque 12, opposée à la face F1, tandis qu'il est engagé librement par un orifice central 32 sur le tenon 6.

Le rotor R1 comporte un corps qui est formé, dans cet exemple de réalisation, par un disque D1 de faible épaisseur réalisé en un matériau tel que du métal, de la céramique ou du plastique dur. Dans cette disposition, le disque D1 forme une structure rigide et porteuse pouvant engrener avec des moyens d'accouplement, non représentés.

Le moteur piézo-électrique M1 comporte de plus des moyens 36 de transmission de mouvement conformés pour transmettre au rotor R1 le mouvement vibratoire du stator S1 et pour déplacer le rotor R1 en rotation autour de son axe X1, dans un plan de déplacement moyen Pdm normal à l'axe de rotation X1.

Ces moyens de transmission 36 sont formés par des organes élastiquement déformables constitués par des lames de flexion 38. Les lames de flexion 38 sont, dans l'exemple de la figure 1, encastrées dans le disque D1 formant la structure porteuse ou corps du rotor R1.

Toujours en se référant à la figure 1, on remarquera que le rotor R1 est sollicité en direction axiale vers le stator S1 par l'intermédiaire de moyens d'appui 39. Ces moyens 39 qui permettent l'appui axial du rotor R1 sur le stator S1 sont constitués ici par un ressort en forme de cuvette 42 monté sur le tenon 6 et sollicité en direction axiale par un roulement 44 qui est lui-même disposé sur le tenon 6 et qui est maintenu sur celui-ci par une vis à tête V1 montée à l'extrémité libre dudit tenon. Ces moyens d'appui permettent l'ajustement de la pression d'appui du rotor R1 sur le stator S1, par vissage ou dévissage de la vis V1.

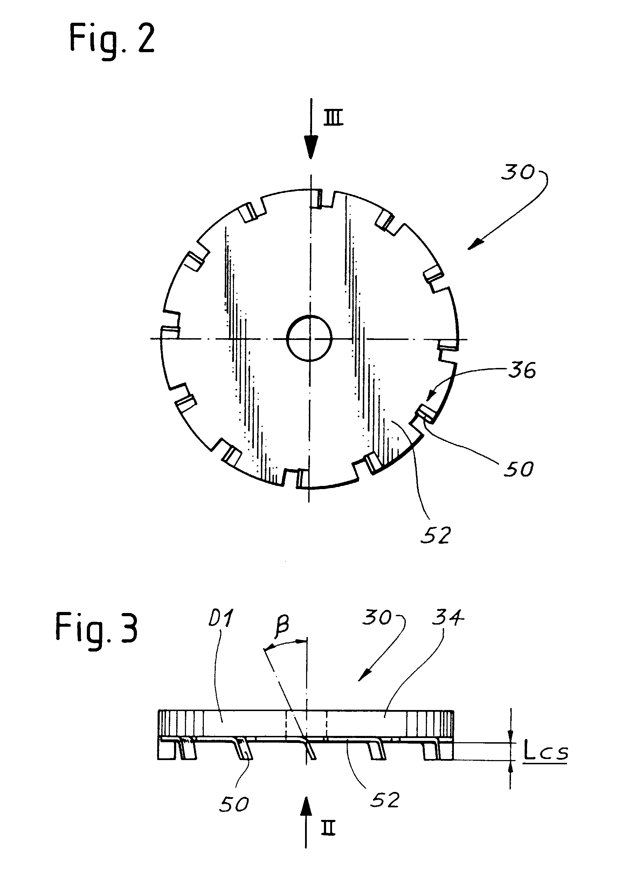

Les figures 2 et 3 représentent un mode de réalisation particulier du rotor décrit dans la demande suisse susmentionnée.

Dans ce mode de réalisation, les organes élastiquement déformables 36 sont constitués par des lames de flexion recourbées 50 (dont seulement seulement une est référencée) ménagées sur un disque plein 52 avec lequel ces dernières viennent de matière. Le disque 52 est rapporté sous le disque D1 formant le corps du rotor R1 et il est fixement solidaire de celui-ci.

Dans cet exemple de réalisation, les lames de flexion 50 sont ménagées à la périphérie du disque 52 par une opération de déformation à froid, et notamment par emboutissage.

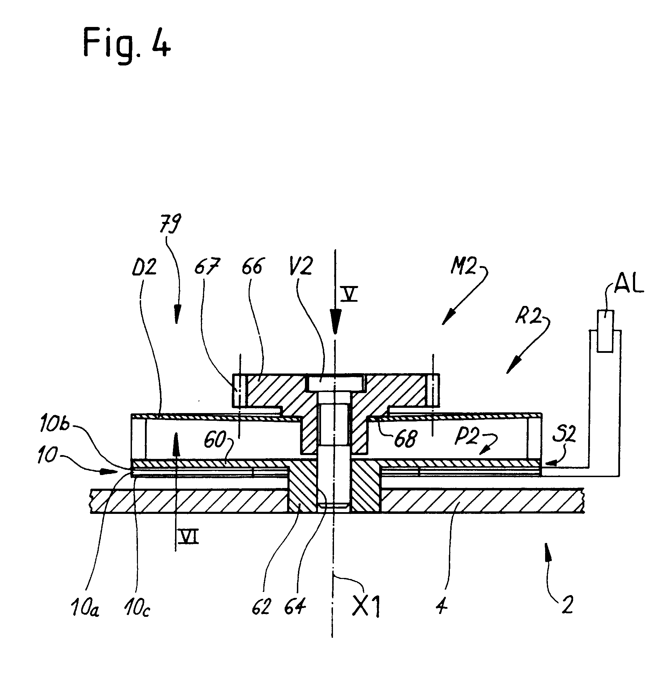

En se référant désormais aux figures 4 à 15, on décrira ci-après un moteur piézo-électrique selon l'invention. Sur ces figures, on a utilisé les mêmes références que celles des figures précédentes pour repérer les éléments analogues à ceux précédemment décrits.

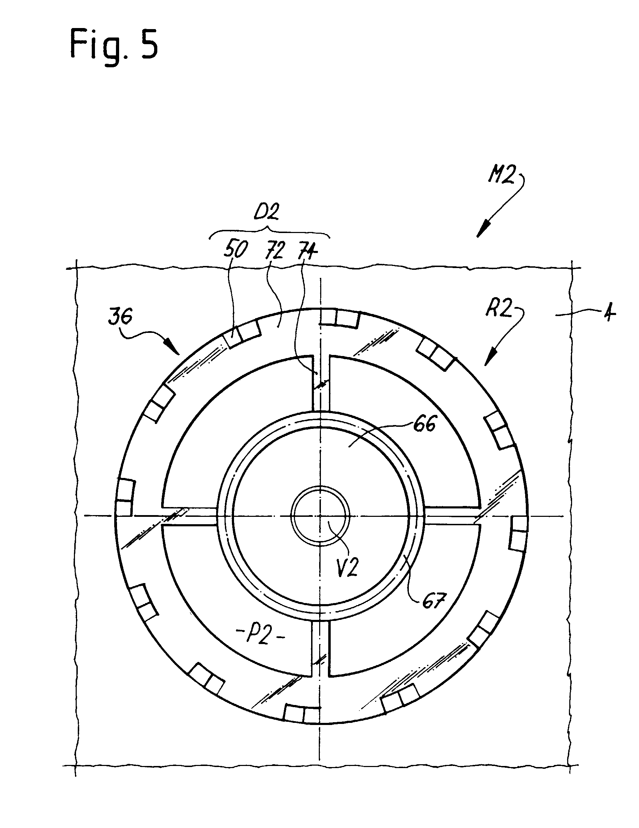

On décrira tout d'abord un moteur piézo-électrique selon un premier mode de réalisation de l'invention, représenté aux figures 4 et 5 et repéré sur celles-ci par la référence générale M2.

Le moteur M2 comporte un rotor R2 qui est monté à rotation, autour de l'axe géométrique X1, sur un stator S2 encastré dans l'embase 4.

Le stator S2 comporte une structure porteuse assurant le support du rotor R2, cette structure étant constituée essentiellement par un plateau annulaire suspendu P2 maintenu fixement dans l'embase 4. Le plateau P2 est formé, d'une part, d'un disque 60 élastiquement déformable sous lequel sont assujettis les moyens piézo-électrique 10 et qui présente une épaisseur uniforme faible, de l'ordre de 0,1 mm (0,1.10⁻³ mètre)

Le plateau P2 comporte d'autre part un canon tubulaire cylindrique 62 faisant saillie du disque 60 et venant de matière avec celui-ci. Le canon 62 est donc chassé fixement par montage à force ou par collage dans un orifice, non référencé, de l'embase 4.

Le canon 62 comporte un orifice central débouchant 64 dans lequel est chassé un tenon cylindrique lisse à tête V2 qui assure le maintien axial et le guidage en rotation du rotor R2 autour de l'axe X1, grâce à deux portées coaxiales (non référencées) ménagées sur celui-ci.

A cet effet, le rotor R2 comporte un moyeu tubulaire étagé 66 de structure rigide, monté à rotation autour de l'axe X1, sur le tenon V2.

Le moyeu 66 comporte des moyens d'entraînement mécanique formés, par exemple, par une denture externe 67 ménagée à la périphérie de celui-ci. La denture 67 est destinée à venir engrener avec un mécanisme à entraîner, non représenté.

Le moyeu 66 comporte par ailleurs, sous sa denture 67 (en prenant le moteur M2 dans sa position représentée à la figure 4) une portée épaulée 68 sur laquelle est engagé fixement le corps du rotor R2.

De façon avantageuse, le corps du rotor R2 est, selon l'invention, essentiellement constitué par un disque souple ajouré D2.

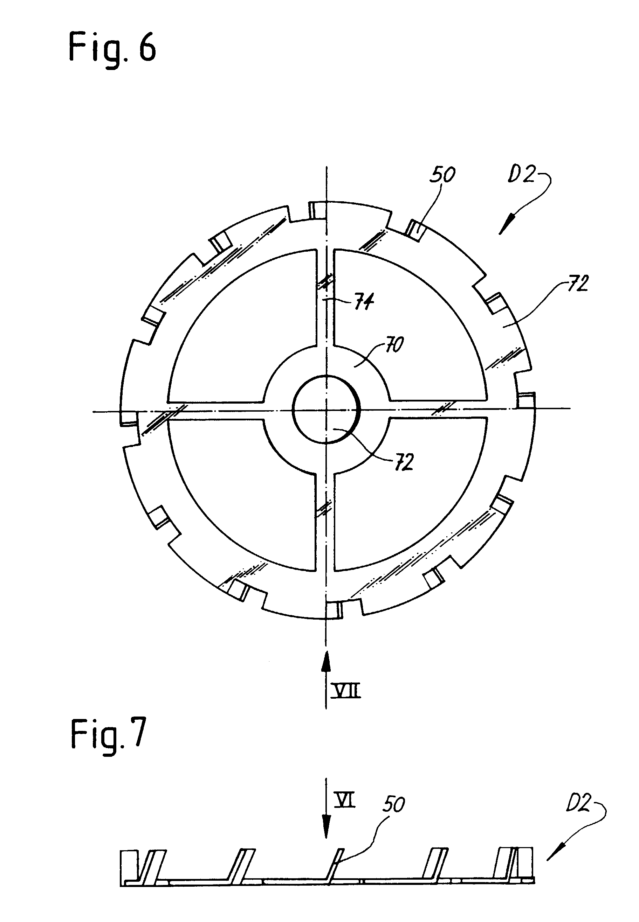

Comme on le voit plus particulièrement sur les figures 5 et 6, le disque D2 comporte une partie centrale annulaire 70 (figure 6) qui comporte une ouverture centrale 72 et qui est reliée, par cette ouverture, au moyeu 66 en étant engagée fixement sur la portée épaulée 68.

Le disque D2 comporte par ailleurs un anneau périphérique 72 sur lequel sont ménagées les lames de flexion 50.

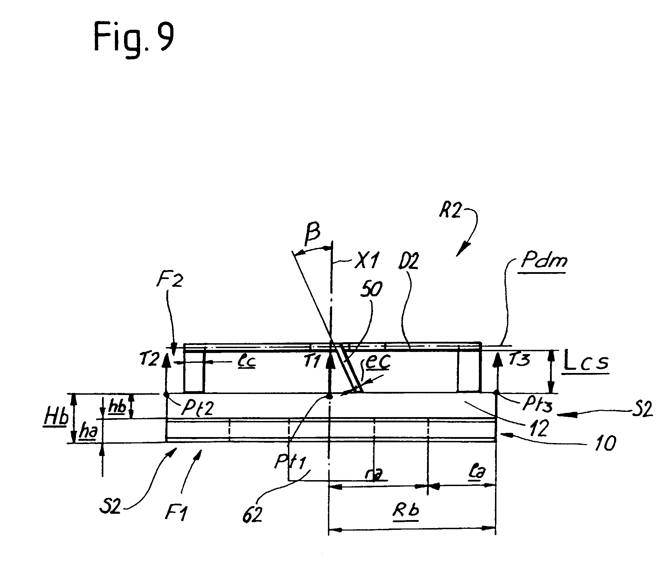

De plus, le disque D2 comporte des bras de flexion 74 (par exemple ici au nombre de quatre, un seul étant référencé) qui relient de façon élastique la partie centrale 70 et l'anneau périphérique 72. Les moyens de transmission 36 qui sont formés par les lames de flexion 50 s'étendant depuis l'anneau périphérique 72 vers le stator S2, les bras de flexion 74, la partie centrale 70, ainsi que l'anneau 72 viennent de matière et forme une pièce rotorique monolithique. On précisera que, l'anneau périphérique 72, les bras de flexion 74 et la partie centrale 70 présentent la même épaisseur et sont, à l'état de repos (figures 7 et 9), disposés dans un même plan (non référencé).

On comprend donc que le corps du rotor R2 est formé par une structure qui est élastiquement déformable, au moins en direction du stator S2, et qui forme au moins en partie les moyens d'appui élastique du rotor R2 sur le stator S2, ces moyens étant référencés 79. Ces moyens sont formés aussi en partie par le moyeu 66 qui sollicite le disque D2 axialement vers le stator de façon axisymétrique (par rapport à l'axe X1), en étant maintenu par la tête, non référencée, du tenon encastré V2.

On comprend qu'en d'autres termes, le corps du rotor R2 est formé essentiellement par le disque élastiquement déformable D2 qui forme de façon intégrée les dits moyens de transmission 36 et lesdits moyens d'appui élastique 79.

Comme on le voit sur la figure 4, à l'état assemblé, et prêt à fonctionner, le moyeu 66 déforme de façon permanente, sous l'action du tenon V2, le corps du rotor R2 qui est précontraint et qui prend une forme de cuvette.

Par ailleurs, on précisera que les électrodes 10b et 10c des moyens piézo-électriques 10 toutes deux en projection frontale une structure pleine et entière, c'est-à-dire non découpée et non structurée par des segments polarisés, comme cela est le cas dans les structures classiques.

On précisera ici que le disque P2 formant le stator S2 est de préférence réalisé en un matériau métallique, tel que du laiton, un alliage d'acier inoxydable ou de l'aluminium, éventuellement revêtu d'une couche mince d'un matériau dur, notamment du chrome ou du nitrure de titane. Les électrodes 10b et 10c sont réalisées de préférence en nickel ou en argent.

En se référant désormais à la figure 9, on donnera plus précisément quelques indications sur la structure du rotor R2 et du stator S2.

Les lames de flexion 50 font donc saillie du rotor R2, et notamment du disque D2, en direction de la face avant du stator S2 selon un angle d'inclinaison β ayant pour origine une droite parallèle à l'axe de rotation X1. De préférence, l'angle β est compris entre 10 et 30°.

Par ailleurs, chaque lame de flexion 50 qui a une forme plane du type parallélépipédique fait saillie du rotor R2 sur une longueur libre Lcs choisie de préférence dans des valeurs se situant entre 0,1 et 0,5 mm (0,1 et 0,5.10⁻³ mètres). De préférence, chaque lame 50 présente une épaisseur ec ayant une valeur entre 0,025 et 0,1 mm (0,025 et 0,1.10⁻³ mètres) et une largeur lc ayant une valeur se situant entre 0,1 et 0,3 mm (0,1 et 0,3.10⁻³ mètres). On remarque donc que les lames de flexion 50, qui sont interposées entre le rotor R2 et le stator S2, aboutent et reposent directement sur la face arrière plane F2 du stator S2, la face arrière F2 étant lisse et exempte de tout élément en saillie ou protubérance.

Les lames de flexion 50 sont réalisées en un matériau, tel qu'un alliage du type béryllium-cuivre ou du type acier inoxydable.

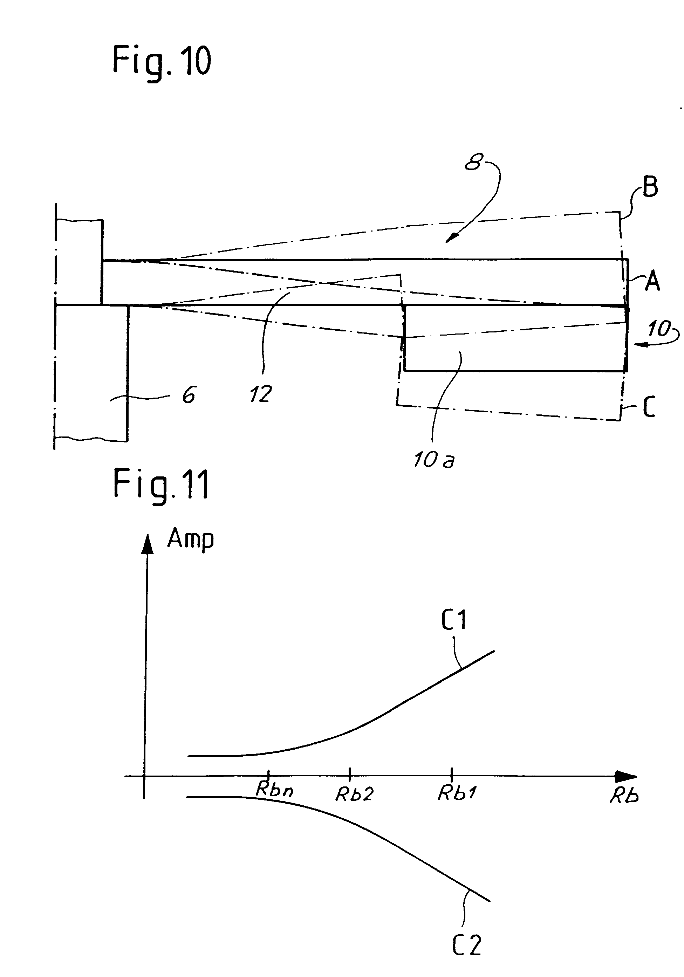

En se référant désormais aux figures 10 à 12, on décrira ci-après une première variante du mouvement vibratoire du stator selon l'invention, donnée à titre d'exemple.

Comme le montre clairement la demi-vue en section du stator S2, représentée à la figure 10, le stator S2 présente une déformation en flexion de part et d'autre de sa position de repos repérée par la référence A1. Cette déformation est représentée de façon très exagérée par les positions extrêmes haute et basse B et C, et en réalité elle ne dépasse pas une amplitude de battement supérieure à 5 µm (5.10⁻⁶ mètres), à la périphérie du stator (flèche). Cette déformation donne au stator S2 une forme de cuvette. Cette déformation en cuvette est due à des contraintes de flexion générées dans le stator S2 grâce aux moyens piézo-électriques 10. Ces contraintes de flexion sont dues à la structure de bimorphe hétérogène formée par l'assemblage rigide des moyens piézo-électriques 10 sur le stator S2.

On précisera ici que pour obtenir la déformation du stator S2 recherchée, on utilise une céramique particulière adaptée pour se déformer radialement losrqu'une excitation électrique spécifique, via les électrodes, lui est appliquée. Plus particulièrement, on a choisit une céramique présentant une constante piézo-électrique d₃₁ élevée, cette constante représentant la déformation obtenue par rapport au champ appliqué.

Ce mouvement vibratoire est du type axisymétrique et fournit au stator une déformation du même type. Ceci est corroboré par les courbes C1 et C2 de la figure 11, où l'on remarque que la variation d'amplitude Amp du stator S2 en fonction de son rayon Rb est de même signe, c'est-à-dire croissante, depuis le centre vers la périphérie du stator S2.

On remarque que les courbes C1 et C2 ne présentent aucun point d'inflexion, ni aucun passage par une valeur d'amplitude nulle. Ce mode vibratoire ne fait donc apparaître aucun cercle nodal sur le stator S2. Cette caractéristique est confirmée par les courbes C3 à Cn qui présentent toutes des valeurs d'amplitude différentes de 0 (zéro). Ces courbes C3 à Cn représentent les variations d'amplitude du stator en fonction de positions angulaires sur celui-ci, ces variations étant prises pour une variation d'amplitude positive correspondant à la courbe C1 de la figure 11. De plus, on observe que ces courbes sont droites et toutes parallèles entre elles, ce qui démontre que ce mode vibratoire n'induit aucun diamètre nodal. On a donc une vibration selon la norme internationale Bₙₘ (n étant le nombre de cercles nodaux et m le nombre de diamètre nodaux ) du type B₀₀.

On précisera aussi que ce mouvement vibratoire et cette déformation axisymétriques sont centrés sur l'axe de rotation X1. On a donc fourni un moteur plan étagé, c'est-à-dire ayant un stator et un rotor de forme essentiellement plane et superposés, moteur qui grâce au mouvement axisymétrique centré sur l'axe de rotation et orienté selon celui-ci, est du type à mouvement vibratoire essentiellement axiale, en référence à l'axe X1.

Grâce à ces modes de vibration et de déformation axisymétriques de très faible amplitude, chaque point par exemple Pt1 à Pt3 (figure 9) du stator S2 effectue tout au moins en projection sur l'axe X1, un déplacement essentiellement linéaire, sur une direction parallèle à l'axe de rotation X1, de même amplitude pour chaque cercle inscrit du rotor au niveau d'un rayon donné (par exemple Rb1 à Rbn) et en phase.

En tout point du stator, et notamment dans la région de contact entre le stator et le rotor, le mode de vibration axisymétrique du moteur piézo-électrique selon l'invention fournit des composantes de vitesse T (seulement trois, T1 à T3, étant représentées sur la figure 9) essentiellement normales au plan de déplacement Pdm du rotor R2. Le stator S2 ne présente donc aucune composante de vitesse significative dans le plan de déplacement Pdm au vu des amplitudes de vibrations extrêmement faibles. Il ne présente donc aucune accélération du type radiale, centrifuge ou centripète qui soit significative. Il est aussi remarquable de noter que ce stator ne présente aucune accélération tangentielle, accélération que l'on retrouve à l'opposé dans les stators des moteurs piézo-électriques classiques ayant un mode vibratoire à ondes progressives ou stationnaires.

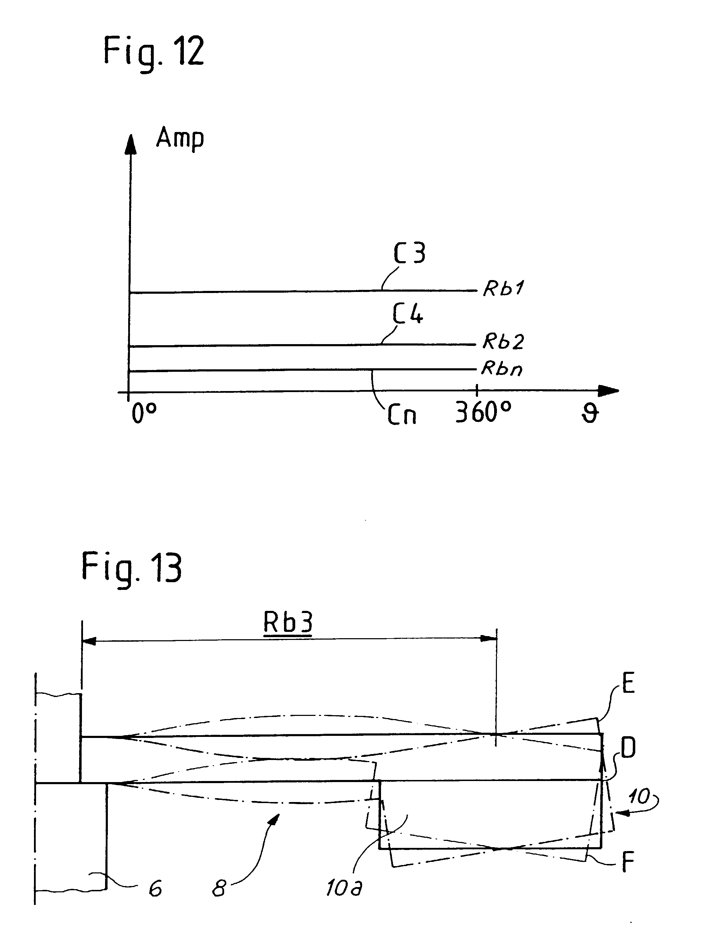

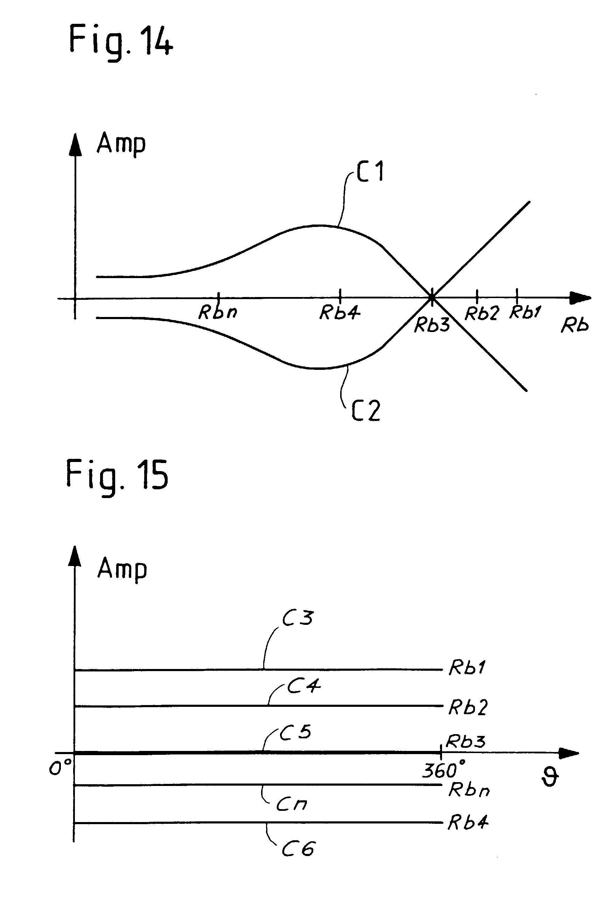

La figure 13 représente la déformation du stator S2 lorsqu'il est soumis à une deuxième variante du mouvement vibratoire axisymétrique selon l'invention, la référence D représentant sa position de repos, tandis que les références E et F représentent l'allure du stator dans ses positions extrêmes de déformation lorsqu'il est excité. Ce mouvement présente cette fois un cercle nodal, repéré notamment au rayon Rb3 (figures 14 et 15). On remarque en effet que les courbes C1 et C2 de la figure 14 passent par une amplitude de valeur nulle marquant un noeud de vibration dans le stator. Les courbes C3 à Cn de la figure 15 illustrent le caractère axisymétrique du mode vibratoire et de la déformation du stator S2 en montrant que pour un rayon donné Rbx du stator, tout cercle inscrit sur celui-ci présente sur 360° d'angle une amplitude (valeur de flèche) constante, les courbes C3 à Cn de la figure 15 étant des droites parallèles entre elles. Ces courbes C3 à Cn représentent les variations d'amplitude du stator en fonction de positions angulaires sur celui-ci, ces variations étant prises pour une variation d'amplitude correspondant à la courbe C2 de la figure 15. Ce mode vibratoire n'induit aucun diamètre nodal sur le stator S2. Ce mode vibratoire est donc du type B₁₀.

Pour obtenir ces modes vibratoires axisymétrique du type B₀₀ et B₁₀, après avoir dimensionné, à titre d'exemple, le stator et les moyens piézo-électriques de la façon suivante (figure 9); on a généré au moyen de l'alimentation électrique AL, un courant alternatif de fréquence F, les dimensions et fréquences pour ces modes ayant les valeurs suivantes :

| | Mode B₀₀ | Mode B₁₀ |
|---|---|---|
| | en mm (10⁻³ m) | en mm (10⁻³ m) |
| Hb | 0,2 | 0,2 |
| hb | 0,1 | 0,1 |
| Rb | 2,5 | 2,5 |
| ra | 1 | 1 |
| ha | 0,1 | 0,1 |
| 1a | 1,5 | 1,5 |

| | en KHz (10³ hertz) | en KHz (10³ hertz) |
|---|---|---|
| F | 14 | 94 |

où Hb est la hauteur totale du stator (disque 60 plus moyens piézo-électriques 10), hb la hauteur du disque 60, c'est-à-dire la hauteur du stator sans les moyens piézo-électriques 10, Ra le grand rayon du stator (pris à la périphérie du disque 60), rb le petit rayon de l'anneau formant les moyens piézo-électrique 10, ha la hauteur totale de ces moyens piézo-électriques 10 (l'épaisseur des électrodes étant ici négligeable), la la largeur des moyens piézo-électriques 10 et F la fréquence de vibration du stator S2. Le disque 60 est dans ce cas constitué d'un alliage d'acier inoxydable, alors que l'élément piézo-électrique 10a est constitué d'une céramique piézo-électrique du type PZT (Titane de plomb dopé au Zirconium). Etant donné que deux variantes du mode vibratoire axisymétrique ont été ici décrites (B₀₀ et B₁₀), on comprendra que le mode vibratoire du moteur selon l'invention peut être généralisé à une notation du type Bₓₒ; où x peut varier de 0 à un nombre n.

En fonctionnement, les moyens piézo-électriques 10 sont excités par l'alimentation électrique AL, ce qui les fait vibrer. La composante radiale de la vibration des moyens piézo-électriques 10 engendre une vibration de flexion du disque 60 par le principe du bimorphe hétérogène, connu de l'homme du métier.

L'alimentation électrique AL délivre un signal alternatif de fréquence F correspondant à la fréquence de résonance du mode B_{X0} désiré.

Le stator S2 dans son intégralité est ainsi excité en résonance dans le mode B_{X0} correspondant à un mouvement vibratoire axisymétrique tel qu'on la décrit ci-avant.

La déformation en flexion du stator, et donc le déplacement essentiellement linéaire de chaque point élémentaire du stator S2 (notamment en projection sur l'axe de rotation X1) dû à la flèche obtenue sont transformés en un déplacement en rotation concomitant du rotor R2 dans le plan de déplacement Pdm, et ce grâce aux organes élastiquement déformables 36 formés par les lames de flexion 50. Ces organes 36, en étant sollicités, fléchissent et induisent dans le rotor R2 des composantes de vitesse tangentielles à la périphérie du rotor, parallèles au plan de déplacement Pdm du rotor R2 et situées dans celui-ci.

Les organes élastiquement déformables 36 formés par les lames de flexion 50 forment donc des moyens de transformation de mouvement capables de transmettre, et en même temps de transformer, le mouvement essentiellement axial linéaire (ou normal) du stator, en un mouvement rotatif perpendiculaire du rotor.

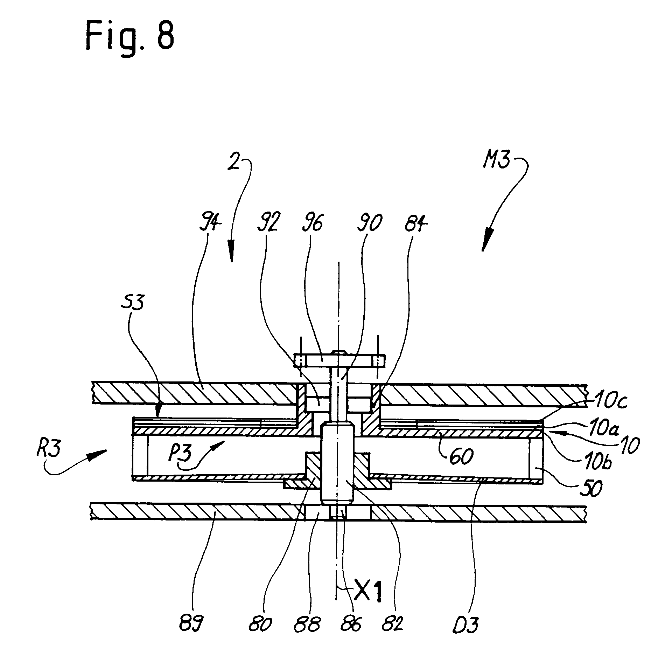

En se référant désormais à la figure 8, où on a utilisé les mêmes références que celles des figures précédentes pour repérer les éléments analogues à ceux précédemment décrits, on décrira désormais un deuxième mode de réalisation du moteur selon l'invention, référencé par la référence générale M3.

Le moteur M3 comporte un stator S3 qui est pourvu de l'élément piézo-électrique 10 et du disque annulaire 60, décrits ci-avant. Sur ce stator S3 est monté un rotor R3 dont le corps qui est identique au rotor R2, comporte un disque souple ajouré D3 de même structure que le disque D2.

Le rotor R3 se différencie en ce qu'il comporte un moyeu étagé 80 chassé sur un axe d'entraînement 82 traversant le stator S3, au travers d'un canon 84 venant de matière avec le disque 60 du plateau suspendu P3.

Le moyeu 80 ne fait que supporter le disque souple ajouré D3 pour le maintenir sollicité, comme représenté à la figure 8, sous contrainte élastique, vers le plateau P3 du rotor R3.

L'axe d'entraînement 82 est monté par un premier moyen de guidage 86 formé par un pivot (même référence) monté à rotation dans un palier 88 formé, dans cette exemple, par une pierre chassée dans un second support 89 formé par une platine ou par un pont d'un mouvement d'horlogerie, représenté ici de façon partielle.

Cet axe 82 est supporté en rotation par un second moyen de guidage 90 constitué par une portée cylindrique (même référence) ménagée sur l'axe 82, et montée à rotation dans un palier 92 formé de même par une pierre qui est chassé dans une creusure, non référencée, ménagée dans le canon 84. On notera que le canon 84 est lui même chassé dans une platine ou un pont 94 qui forme le support 2 du stator S3.

On préçisera par ailleurs que l'axe d'entraînement 82 qui est solidaire en rotation corps du rotor R3, via le moyeu 80, pour assurer son guidage autour de l'axe X1, est monté à rotation au moins à l'intérieur du support 2 qu'il traverse pour faire extérieurement saillie de celui-ci et pour coopérer avec un moyen d'engrénement mécanique 96.

Ce moyen d'engrénement mécanique 96 est constitué à titre d'exemple par un pignon extérieurement denté conformé pour venir engrener avec un mécanisme à entraîner, non représenté.

Le stator S3 présente à titre d'exemple, les mêmes modes de vibration que ceux précédemment décrits, les moteurs M3 et M2 présentant à titre d'exemple les mêmes dimensions.

## Revendications

1. Moteur piézo-électrique, du type comprenant :
- un support (2),
- un stator (S2, S3) solidaire du support (2),
- des moyens piézo-électriques (10) susceptibles d'être électriquement excités pour impliquer un mouvement vibratoire au stator (S2, S3),
- un rotor (R2, R3) monté à rotation par rapport au support (2), ce rotor comportant un corps sur lequel sont disposées des lames de flexion (50) formant des moyens de transmission (36) conformés pour transmettre le mouvement vibratoire du stator (S2, S3) audit rotor (R2, R3) et pour entraîner ce rotor en rotation, et
- des moyens d'appui axial élastique du rotor sur le stator,
caractérisé en ce que le corps du rotor est formé par une structure (D2, D3) qui est élastiquement déformable, au moins axialement en direction du stator, et qui forme lesdits moyens d'appui, et en ce que lesdites lames de flexion (50) sont ménagées directement dans le corps élastique du rotor et viennent de matière avec celui-ci.

2. Moteur piézo-électrique selon la revendication 1, caractérisé en ce que le corps du rotor est constitué essentiellement par un disque souple (D2, D3).

3. Moteur piézo-électrique selon la revendication 1 ou 2, caractérisé en ce que le corps du rotor est constitué essentiellement par un disque ajouré.

4. Moteur piézo-électrique selon la revendication 2 ou 3, caractérisé en ce que le disque (D2, D3) formant le corps du rotor comporte des bras de flexion (74) qui relient de façon élastique une partie centrale (70) du rotor et un anneau périphérique (72) ménagé sur celui-ci, sur lequel sont conformés lesdites lames de flexion (50).

5. Moteur piézo-électrique selon la revendication 4, caractérisé en ce que les lames de flexion (50), les bras de flexion (74), ladite partie centrale (70), ainsi que ledit anneau périphérique (72) viennent de matière.

6. Moteur piézo-électrique selon l'une des revendications précédentes, caractérisé en ce que ledit rotor comporte un axe d'entraînement (82) qui est solidaire en rotation dudit corps et qui assure son guidage, cet axe étant monté à rotation au moins à l'intérieur du support (2) qu'il traverse pour faire extérieurement saillie de celui-ci et pour coopérer avec un moyen d'engrénement mécanique (96).

7. Moteur piézo-électrique selon la revendication 6, caractérisé en ce que ledit axe (82) est monté à rotation et supporté axialement dans une plaque support d'une pièce d'horlogerie, telle qu'un pont ou une platine.

## Patentansprüche

1. Piezoelektrischer Motor der Bauart, die umfaßt:
- einen Support (2),
- einen mit dem Support (2) verbundenen Stator (S2, S3),
- piezoelektrische Mittel (10), die elektrisch erregbar sind, um den Stator (S2, S3) in Vibrationsbewegung zu versetzen,
- einen Rotor (R2, R3), der relativ zum Support (2) drehbeweglich montiert ist, welcher Rotor einen Korpus umfaßt, auf dem Biegelamellen (50) angeordnet sind, welche übertragungsmittel (36) bilden, angepaßt zum übertragen der Vibrationsbewegung des Stators (S2, S3) auf den Rotor (R2, R3) und zum Drehantrieb des Rotors, und
- elastische Mittel zum axialen Andrücken des Rotors an den Stator,
dadurch gekennzeichnet, daß der Rotorkorpus von einer zumindest axial in Richtung Stator elastisch deformierbaren Struktur (D2, D3) gebildet ist, die die elastischen Mittel bildet, und daß die Biegelamellen (50) direkt in dem elastischen Korpus des Rotors eingearbeitet und einstückig mit diesem sind.

2. Piezoelektrischer Motor nach Anspruch 1, dadurch gekennzeichnet, daß der Rotorkorpus im wesentlichen von einer weichen Scheibe (D2, D3) gebildet ist.

3. Piezoelektrischer Motor nach Anspruch 1 oder 2, dadurch gekennzeichnet, daß der Rotorkorpus im wesentlichen von einer durchbrochenen Scheibe gebildet ist.

4. Piezoelektrischer Motor nach Anspruch 2 oder 3, dadurch gekennzeichnet, daß die den Rotorkorpus bildende Scheibe (D2, D3) Biegearme (74) umfaßt, die elastisch eine zentrale Partie (70) des Rotors und einen an sie angeformten peripheren Ring (72), an den die Biegelamellen (50) angepaßt sind, verbinden.

5. Piezoelektrischer Motor nach Anspruch 4, dadurch gekennzeichnet, daß die Biegelamellen (50), die Biegearme (74), die zentrale Partie (70) wie auch der periphere Ring (72) einstückig sind.

6. Piezoelektrischer Motor nach einem der vorangehenden Ansprüche, dadurch gekennzeichnet, daß der Rotor eine mit dem Korpus drehfest verbundene und seine Führung sicherstellende Abtriebswelle (82) aufweist, die drehbeweglich zumindest im Innern des Supports (2) montiert ist, den sie durchsetzt, um über ihn hinaus zu ragen und um mit einem mechanischen Getriebe (96) zusammenzuwirken.

7. Piezoelektrischer Motor nach Anspruch 6, dadurch gekennzeichnet, daß die Welle (82) in einer Supportplatte eines Zeitmeßgerätes, wie einer Brücke oder einer Platine, drehbeweglich montiert und axial abgestützt ist.

## Claims

1. Piezoelectric motor of the type comprising :
- a support (2),
- a stator (S2, S3) fixed to the support (2),
- piezoelectric means (10) adapted to be electrically excited so as to induce a vibratory motion in the stator (S2, S3),
- a rotor (R2, R3) mounted for rotation relative to the support (2), such rotor including a body on which flexion blades (50) are arranged to form transmission means (36) adapted to transmit the vibratory motion of the stator (S2, S3) to the rotor (R2, R3) and in order to drive such rotor in rotation, and
- axial elastic support means for the rotor on the stator,
characterized in that the body of the rotor is formed by a structure (D2, D3) which is elastically deformable, at least axially in the direction of the stator, and which at least in part forms said support means.

2. Piezoelectric motor according to claim 1, characterized in that the body of the rotor is basically constituted by a pliable disc (D2, D3).

3. Piezoelectric motor according to claim 1 or 2, characterized in that the body of the rotor is basically constituted by a perforated disc.

4. Piezoelectric motor according to claim 2 or 3, characterized in that the disc (D2, D3) forming the body of the rotor includes flexion arms (74) which elastically couple a central portion (70) of the rotor and a peripheral ring (72) formed on the latter to which said flexion blades (50) are conformed.

5. Piezoelectric motor according to claim 4, characterized in that the flexion blades (50), the flexion arms (74), said central portion (70), and said peripheral ring (72) are materially integral.

6. Piezoelectric motor according to any of the preceding claims, characterized in that said rotor includes a driving spindle (82) which is fixed to said body in rotation and which assures its centering, such spindle being mounted to rotate at least within the support (2) which it traverses in order to project exteriorly therefrom and in order to cooperate with a mechanical engaging means (96).

7. Piezoelectric motor according to claim 6, characterized in that said spindle (82) is rotatably mounted and axially supported in a plate support, such as a bridge or base plate, in a timepiece.
